# EUROPEAN PATENT APPLICATION

(11) **EP 3 694 037 A1**
(43) Date of publication of application: **12.08.2020**
(21) Application number: 18863988.4
(22) Date of filing: 27.09.2018
(51) Int. Cl.: H01M 4/86, H01M 8/10, H01M 8/1004

(54) **ELECTRODE CATALYST LAYER, MEMBRANE ELECTRODE ASSEMBLY, AND SOLID POLYMER-TYPE FUEL CELL**

(30) Priority: 02.10.2017 JP 2017192540
(71) Applicant: Toppan Printing Co., Ltd., Tokyo 110-0016 (JP)
(72) Inventor: TANIWAKI, Kazuma, Tokyo 110-0016 (JP)
(74) Representative: Hoffmann Eitle
(86) International application number: PCT/JP2018/035936
(87) International publication number: WO 2019/069789

(57) **Abstract**

An electrode catalyst layer includes: carbon particles supporting a catalyst material; an aggregate of polymer electrolytes; and polymer electrolyte fibers as organic electrolyte fibers. The polymer electrolyte fibers have an average fiber diameter of 2 µm or less, and preferably 1 µm or less. A membrane electrode assembly includes a polymer electrolyte membrane; and a pair of electrode catalyst layers sandwiching the polymer electrolyte membrane, wherein at least one of the pair of electrode catalyst layers is the electrode catalyst layer including the polymer electrolyte fibers.

## Description

### [Technical Field]

The present invention relates to an electrode catalyst layer provided in a fuel cell, a membrane electrode assembly having an electrode catalyst layer, and a polymer electrolyte fuel cell.

### [Background Art]

Attention has been paid to fuel cells as batteries that contribute to solving environmental problems and energy issues. Fuel cells generate electric power by using a chemical reaction between a fuel such as hydrogen and an oxidant such as oxygen. Among the fuel cells, polymer electrolyte fuel cells, which can operate at low temperatures and can be reduced in size, are expected to be used as portable power supplies, household power supplies, on-vehicle power supplies, and the like.

A polymer electrolyte fuel cell includes a membrane electrode assembly that includes an electrode catalyst layer constituting a fuel electrode, which is an anode, an electrode catalyst layer constituting an air electrode, which is a cathode, and a polymer electrolyte membrane sandwiched by the two electrode catalyst layers. A fuel gas containing hydrogen is supplied to the electrode catalyst layer, which constitutes a fuel electrode, whereas an oxidant gas containing oxygen is supplied to the electrode catalyst layer, which constitutes an air electrode. Accordingly, the following electrochemical reactions occur between the fuel electrode and the air electrode to generate electric power (e.g., see PTL 1).
Fuel electrode:

H₂ → 2H⁺ + 2e⁻

Air electrode:

1/2 O₂ + 2H⁺ + 2e⁻ → H₂O

That is, protons and electrons are generated from the fuel gas supplied to the fuel electrode, due to an action by the catalyst included in the electrode catalyst layer. Protons are transferred by a polymer electrolyte contained in the electrode catalyst layer and the polymer electrolyte membrane, and migrate to the air electrode via the polymer electrolyte membrane. Electrons are extracted from the electrode catalyst layer to an external circuit, and migrate to the air electrode via the external circuit. In the air electrode, the oxidant gas reacts with the protons and electrons, which have migrated from the fuel electrode, to generate water. Thus, as electrons migrate through an external circuit, an electric current is generated.

### [Citation List]

### [Patent Literature]

PTL 1: JP 2003-115299 A

### [Summary of the Invention]

### [Technical Problem]

In production of electrode catalyst layers, cracking may occur in the electrode catalyst layers due to shrinkage by drying. When a crack is present in the electrode catalyst layer, a polymer electrolyte membrane may be exposed through the crack in the membrane electrode assembly. Such exposure of the polymer electrolyte membrane may cause a decrease in durability of the membrane electrode assembly or a decrease in power generation performance of the polymer electrolyte fuel cell.

The present invention has been made to provide an electrode catalyst layer, a membrane electrode assembly, and a polymer electrolyte fuel cell that can reduce occurrence of cracking.

### [Solution to Problem]

An electrode catalyst layer for solving the above problem includes: carbon particles supporting a catalyst material; an aggregate of polymer electrolytes; and organic electrolyte fibers, wherein the organic electrolyte fibers have an average fiber diameter of 2 µm or less.

With this configuration, a structure in which the organic electrolyte fibers are entangled with each other in the electrode catalyst layer is formed, and this structure functions as a support for the aggregate in the electrode catalyst layer. Accordingly, occurrence of cracking in the electrode catalyst layer is reduced.

In the above configuration, the organic electrolyte fibers preferably have an average fiber diameter of 1 µm or less.

With this configuration, since pores are sufficiently formed in the electrode catalyst layer, the output of the polymer electrolyte fuel cell having the electrode catalyst layer can be improved.

In the above configuration, the organic electrolyte fibers preferably have an average fiber length of 1 µm or more and 200 µm or less.

With this configuration, since aggregation of the organic electrolyte fibers is reduced in the electrode catalyst layer, formation of pores is facilitated. Further, since a structure in which the organic electrolyte fibers are entangled with each other in the electrode catalyst layer is suitably formed, the electrode catalyst layer has an increased strength. Accordingly, the effect of reducing occurrence of cracking is further enhanced.

In the above configuration, the electrode catalyst layer may further include carbon fibers.

With this configuration, proton conductivity by the organic electrolyte fibers and electron conductivity by the carbon fibers can be improved in the electrode catalyst layer. Accordingly, the output of the polymer electrolyte fuel cell having the electrode catalyst layer is improved.

In the above configuration, a ratio of a total mass of the organic electrolyte fibers to a total mass of the carbon particles included in the electrode catalyst layer is preferably in a range of 0.1 or more and 3.0 or less.

With this configuration, since conduction of protons in the electrode catalyst layer is promoted, the output of the polymer electrolyte fuel cell having the electrode catalyst layer can be improved.

In the above configuration, the organic electrolyte fibers may be made of a polymer electrolyte.

With this configuration, proton conductivity in the electrode catalyst layer is increased.

In the above configuration, the organic electrolyte fiber is preferably made of a polymer electrolyte, and a ratio of a total mass of the aggregate to a total mass of the carbon particles included in the electrode catalyst layer is preferably 1.0 or less.

With this configuration, formation of pores in the electrode catalyst layer is facilitated, and the amount of polymer electrolyte required for formation of the electrode catalyst layer can be reduced. Since the electrode catalyst layer includes fibers made of a polymer electrolyte, good proton conductivity can be obtained even if the ratio of the aggregate is not high. Accordingly, the output of the polymer electrolyte fuel cell having the electrode catalyst layer can be improved.

A membrane electrode assembly for solving the above problem includes: a polymer electrolyte membrane; and a pair of electrode catalyst layers sandwiching the polymer electrolyte membrane, wherein at least one of the pair of electrode catalyst layers is the electrode catalyst layer described above.

With this configuration, a membrane electrode assembly having an electrode catalyst layer with reduced occurrence of cracking is achieved.

A polymer electrolyte fuel cell for solving the above problem includes: the membrane electrode assembly described above; and a pair of separators sandwiching the membrane electrode assembly.

With this configuration, a polymer electrolyte fuel cell including an electrode catalyst layer with reduced occurrence of cracking is achieved.

### [Advantageous Effects of Invention]

According to the present invention, occurrence of cracking in the electrode catalyst layer can be reduced.

### [Brief Description of Drawings]

Fig. 1 is a view illustrating a cross-sectional structure of a membrane electrode assembly according to an embodiment of a membrane electrode assembly.
Fig. 2 is a schematic view illustrating a first configuration of an electrode catalyst layer of an embodiment.
Fig. 3 is a schematic view illustrating a second configuration of an electrode catalyst layer of an embodiment.
Fig. 4 is a view illustrating a perspective structure of a polymer electrolyte fuel cell of an embodiment.

### [Description of Embodiments]

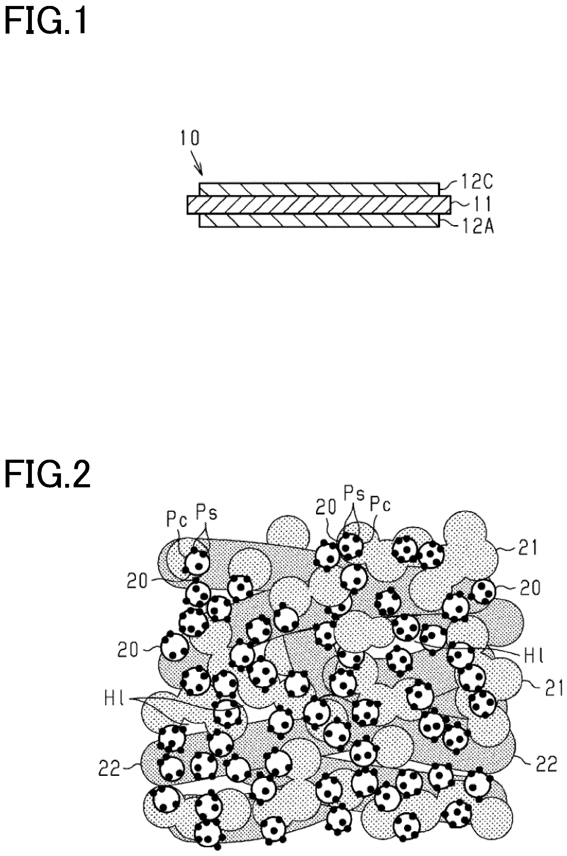

With reference to Figs. 1 to 4, an embodiment of an electrode catalyst layer, a membrane electrode assembly, and a polymer electrolyte fuel cell will be described.

### [Electrode Catalyst Layer, and Membrane Electrode Assembly]

With reference to Figs. 1 to 3, a configuration of a membrane electrode assembly having an electrode catalyst layer and an electrode catalyst layer will be described.

As shown in Fig. 1, a membrane electrode assembly 10 includes a polymer electrolyte membrane 11 and two electrode catalyst layers, that is, a fuel electrode catalyst layer 12A and an air electrode catalyst layer 12C. The fuel electrode catalyst layer 12A is an electrode catalyst layer used for a fuel electrode, which is an anode of a polymer electrolyte fuel cell, and the air electrode catalyst layer 12C is an electrode catalyst layer used for an air electrode, which is a cathode of a polymer electrolyte fuel cell.

The polymer electrolyte membrane 11 is sandwiched between the fuel electrode catalyst layer 12A and the air electrode catalyst layer 12C. The fuel electrode catalyst layer 12A is in contact with one of two surfaces of the polymer electrolyte membrane 11, and the air electrode catalyst layer 12C is in contact with the other of two surfaces of the polymer electrolyte membrane 11.

When viewed from a position facing one of the surfaces of the polymer electrolyte membrane 11, the outer shape of the fuel electrode catalyst layer 12A is substantially the same as the outer shape of the air electrode catalyst layer 12C. The outer shape of the polymer electrolyte membrane 11 is larger than each of the outer shapes of the catalyst layers 12A and 12C. The outer shape of the polymer electrolyte membrane 11 and the outer shapes of the catalyst layers 12A and 12C are not specifically limited, and may be, for example, a rectangular.

The polymer electrolyte membrane 11 includes a polymer electrolyte. The polymer electrolyte used for the polymer electrolyte membrane 11 may be one having proton conductivity, and may be, for example, a fluorine-based polymer electrolyte or a hydrocarbon-based polymer electrolyte. Examples of the fluorine-based polymer electrolyte include Nafion (registered trademark: manufactured by DuPont). Examples of the hydrocarbon-based polymer electrolyte include engineering plastics and compounds in which a sulfonate group is introduced into a copolymer of engineering plastics.

Fig. 2 is a schematic view illustrating a first configuration of an electrode catalyst layer of the present embodiment. As shown in Fig. 2, the fuel electrode catalyst layer 12A and the air electrode catalyst layer 12C each include: catalyst material-supporting carbon bodies 20, which are carbon particles Pc that support catalyst materials Ps; aggregates 21 of polymer electrolytes; and polymer electrolyte fibers 22, which are fibrous polymer electrolytes. The polymer electrolyte fiber 22 is an example of an organic electrolyte fiber. In the electrode catalyst layer, the aggregates 21 and the polymer electrolyte fibers 22 are present around the dispersed catalyst material-supporting carbon bodies 20, and pores Hl are formed between these catalyst material-supporting carbon bodies 20.

Examples of the catalyst material Ps include: platinum group elements such as platinum, palladium, ruthenium, iridium, rhodium, and osmium; metals such as iron, lead, copper, chromium, cobalt, nickel, manganese, vanadium, molybdenum, gallium, and aluminum; and alloys, oxides, or composite oxides thereof. In particular, platinum or platinum alloy is preferably used as the catalyst material Ps. A plurality of catalyst materials Ps included in the electrode catalyst layer preferably have an average particle size in the range of 0.5 nm or more and 20 nm or less, and more preferably in the range of 1 nm or more and 5 nm or less. When the average particle size of the catalyst materials Ps is equal to or larger than the lower limit described above, the catalytic stability is enhanced. When the average particle size of the catalyst materials Ps is equal to or smaller than the upper limit described above, the catalytic activity is enhanced.

The carbon particle Pc may be an electrically conductive fine particulate carrier, which is not affected by the catalyst. The carbon particle Pc may be made of, for example, carbon material powder such as carbon black, graphite, activated carbon, carbon nanotube, and fullerene. A plurality of carbon particles Pc included in the electrode catalyst layer preferably have an average particle size in the range of 10 nm or more and 1000 nm or less, and more preferably in the range of 10 nm or more and 100 nm or less. When the average particle size of the carbon particles Pc is equal to or larger than the lower limit described above, electron conduction paths are easily formed in the electrode catalyst layer. When the average particle size of the carbon particles Pc is equal to or smaller than the upper limit described above, the electrode catalyst layer can be formed thinner to a degree that does not cause excessive resistance, and a decrease in the output of the fuel cell can be prevented.

When the carbon material that supports the catalyst material Ps is particulate, the carbon material has an increased area for supporting the catalyst material Ps, and thus the carbon material can support a high density of catalyst material Ps. Accordingly, the catalyst activity can be improved.

The aggregate 21 of polymer electrolytes is a mass of the polymer electrolytes, which are ionomers, aggregated by an aggregation force. The aggregation force includes Coulomb force and van der Waals force acting between ionomers. The polymer electrolyte fiber 22 is a polymer electrolyte constituting an elongated shape by crosslinking or the like.

The polymer electrolyte constituting the aggregate 21 and the polymer electrolyte fiber 22 may be one having proton conductivity, and may be, for example, a fluorine-based polymer electrolyte or a hydrocarbon-based polymer electrolyte. Examples of the fluorine-based polymer electrolyte include Nafion (registered trademark: manufactured by DuPont). Examples of the hydrocarbon-based polymer electrolyte include engineering plastics and compounds in which a sulfonate group is introduced into a copolymer of engineering plastics.

The polymer electrolyte constituting the aggregate 21 and the polymer electrolyte constituting the polymer electrolyte fiber 22 may be the same or may be different from each other. Further, the polymer electrolyte constituting each of the aggregate 21 and the polymer electrolyte fiber 22 and the polymer electrolyte constituting the polymer electrolyte membrane 11 may be the same or may be different from each other. In order to enhance adhesion between the catalyst layers 12A and 12C and the polymer electrolyte membrane 11, the polymer electrolyte included in the catalyst layers 12A and 12C and the polymer electrolyte included in the polymer electrolyte membrane 11 are preferably the same material.

Since the polymer electrolyte fibers 22 are included in the catalyst layers 12A and 12C, the polymer electrolyte fibers 22 are entangled with each other and function as a support in the electrode catalyst layer. Accordingly, cracking or the like is suppressed in the electrode catalyst layer. Therefore, compared with the conventional case where the electrode catalyst layer is made of the catalyst material-supporting carbon body 20 and the aggregate 21 of polymer electrolytes, occurrence of cracking in the electrode catalyst layer is reduced.

Further, in order to promote an electrode reaction in the polymer electrolyte fuel cell, a three-phase interface, at which the carbon particle Pc, which is an electrically conductive material, a polymer electrolyte, which is a proton-conductive material, and the gas supplied to the electrode catalyst layer are in contact with each other, needs to be formed around the catalyst material Ps, particularly in the fuel electrode. In the present embodiment, since the aggregates 21 of polymer electrolytes are located in the gaps between the plurality of polymer electrolyte fibers 22, the probability of contact between the catalyst material Ps and the polymer electrolyte is increased compared with the case where the electrode catalyst layer is made of only the catalyst material-supporting carbon body 20 and the polymer electrolyte fiber 22. That is, the positions where the three-phase interface is formed can be increased. Accordingly, the electrode reaction is promoted to thereby increase the output of the polymer electrolyte fuel cell.

A plurality of polymer electrolyte fibers 22 included in the electrode catalyst layer have an average fiber diameter of 2 µm or less. When the average fiber diameter is 2 µm or less, appropriate thinness for a fiber material contained in the electrode catalyst layer can be ensured.

In order to improve the output of the polymer electrolyte fuel cell, it is desired that the gas supplied to the electrode catalyst layer is suitably diffused into the electrode catalyst layer through the pores Hl in the electrode catalyst layer, and that the water generated by the electrode reaction is appropriately discharged through the pores HI, particularly in the air electrode. Further, due to the presence of the pores HI, the three-phase interface is more likely to be formed and thus the electrode reaction is promoted. This also contributes to improvement in the output of the polymer electrolyte fuel cell.

From the above viewpoints, the electrode catalyst layer preferably has the pores Hl of an appropriate size and amount. When the average fiber diameter of the polymer electrolyte fiber 22 is 1 µm or less, sufficient gaps are formed in the structure in which the polymer electrolyte fibers 22 are entangled with each other in the electrode catalyst layer, and thus sufficient pores Hl are ensured. Accordingly, the output of the fuel cell can be improved. Further, when the average fiber diameter of the polymer electrolyte fiber 22 is in the range of 0.5 nm or more and 500 nm or less, the output of the fuel cell is particularly increased.

The average fiber length of the plurality of polymer electrolyte fibers 22 in the electrode catalyst layer is preferably larger than the average fiber diameter and in the range of 1 µm or more and 200 µm or less. When the average fiber length is within the above range, aggregation of the polymer electrolyte fibers 22 in the electrode catalyst layer is reduced, which facilitates formation of the pores Hl. Further, when the average fiber length is within the above range, since a structure in which the polymer electrolyte fibers 22 are entangled with each other in the electrode catalyst layer is suitably formed, the electrode catalyst layer has an increased strength. Accordingly, the effect of reducing occurrence of cracking is further enhanced.

A ratio of the total mass of the polymer electrolyte fibers 22 to the total mass of the carbon particles Pc included in the electrode catalyst layer is preferably in a range of 0.1 or more and 3.0 or less. When the mass ratio between the carbon particles Pc and the polymer electrolyte fibers 22 is within the above range, conduction of protons in the electrode catalyst layer is promoted. Accordingly, the output of the fuel cell can be improved. The total mass of the carbon particles Pc is the total mass of only the carbon particles Pc, which is the weight that does not include the mass of the catalyst materials Ps supported by the carbon particles Pc.

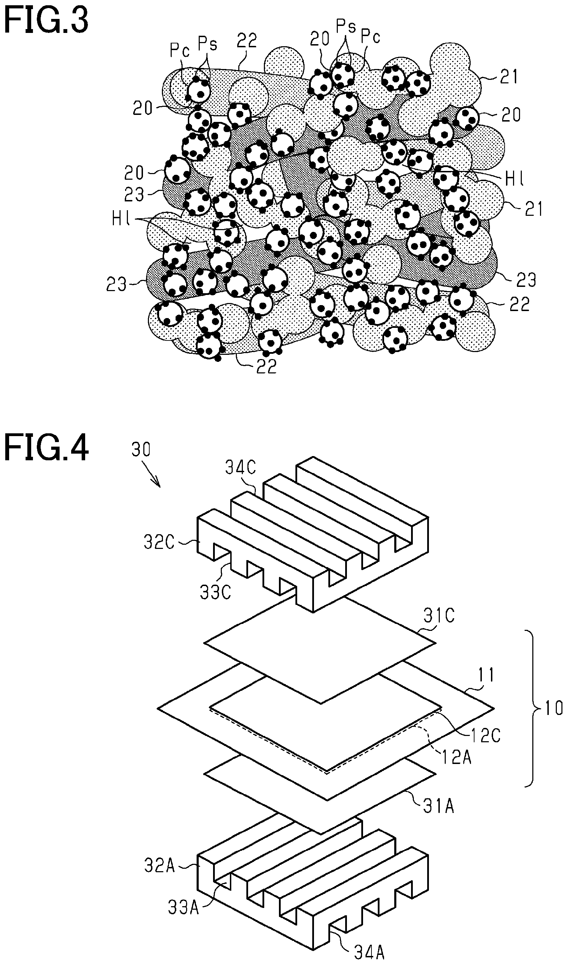

Fig. 3 is a schematic view illustrating a second configuration of the electrode catalyst layer of the present embodiment. As shown in Fig. 3, each of the fuel electrode catalyst layer 12A and the air electrode catalyst layer 12C may further include carbon fibers 23, in addition to the catalyst material-supporting carbon body 20, the aggregate 21 of polymer electrolytes, and the polymer electrolyte fiber 22.

The carbon fiber 23 is a fibrous structure whose constituent element is carbon. The carbon fiber 23 may be made of, for example, fibrous carbon materials such as carbon fibers, carbon nanofibers, and carbon nanotubes. In particular, carbon nanofibers and carbon nanotubes are preferably used.

A plurality of carbon fibers 23 included in the electrode catalyst layer preferably have an average fiber diameter of 500 nm or less. When the average fiber diameter is 500 nm or less, appropriate thinness for a fiber material contained in the electrode catalyst layer can be ensured.

A plurality of carbon fibers 23 included in the electrode catalyst layer preferably have an average fiber length in the range of 1 µm or more and 200 µm or less. When the average fiber length of the carbon fibers 23 is within the above range, since a structure in which the polymer electrolyte fibers 22 and the carbon fibers 23 are entangled with each other in the electrode catalyst layer is suitably formed, the electrode catalyst layer has an increased strength. Accordingly, the effect of reducing occurrence of cracking is further enhanced.

In the second configuration, the polymer electrolyte fibers 22 and the carbon fibers 23 are entangled with each other such that the carbon fibers 23 are located between the plurality of polymer electrolyte fibers 22, and the polymer electrolyte fibers 22 are located between the plurality of carbon fibers 23. Since the polymer electrolyte fibers 22 and the carbon fibers 23 as the fiber materials are entangled with each other to function as a support in the electrode catalyst layer, occurrence of cracking in the electrode catalyst layer is reduced as with the first configuration.

Even when the electrode catalyst layer includes only the carbon fibers 23 as the fiber material, and does not include the polymer electrolyte fibers 22, a structure in which the carbon fibers 23 are entangled with each other is formed, and thus cracking can be reduced. However, since the carbon fibers 23 contribute only to electron conduction, and do not contribute to proton conduction, the ratio of the polymer electrolyte included in the electrode catalyst layer decreases in the structure in which the electrode catalyst layer includes only the carbon fibers 23 as the fiber material. As a consequence, proton conductivity in the electrode catalyst layer is lowered. If the proton conductivity is compensated by increasing the amount of the aggregates 21 of polymer electrolytes, the volume of the pores Hl decreases, leading to a failure in maintaining gas diffusivity, drainage ability, and the like.

On the other hand, in the present embodiment, in which the electrode catalyst layer includes the polymer electrolyte fibers 22 as the fiber material, compared with the case where it includes only the carbon fibers 23 as the fiber material, proton conduction in the electrode catalyst layer can be promoted while ensuring a sufficient quantity of the pores Hl.

Further, in order to extract electrons generated by an electrode reaction, the electrode catalyst layer is also required to have electron conductivity. When the electrode catalyst layer includes the polymer electrolyte fibers 22 and the carbon fibers 23 as the fiber material, the electrode catalyst layer has favorable proton conductivity, electron conductivity, and formation of the pores Hl. Accordingly, the output of the polymer electrolyte fuel cell can be improved.

In each of the first configuration and the second configuration, the electrode catalyst layer includes the polymer electrolyte fibers 22 that contribute to proton conduction. Accordingly, the content of the aggregate 21 in the electrode catalyst layer can be reduced compared with the case where the electrode catalyst layer includes only the aggregates 21 of polymer electrolytes. A ratio of the total mass of the aggregates 21 to the total mass of the carbon particles Pc included in the electrode catalyst layer is preferably 1.0 or less, and more preferably 0.4 or more and 0.8 or less. The total mass of the carbon particles Pc is the total mass of only the carbon particles Pc, which is the weight that does not include the mass of the catalyst materials Ps supported by the carbon particles Pc.

The configuration related to the average fiber diameter and the average fiber length of the polymer electrolyte fibers 22, and the mass ratio between the carbon particles Pc and the polymer electrolyte fibers 22, which are described in connection with the first configuration, can also be applied to the second configuration.

The average fiber diameter and the average fiber length of the polymer electrolyte fibers 22 and the carbon fibers 23 can be measured by observing the cross-section of the electrode catalyst layer, for example, by using a scanning electron microscope. For example, the average fiber diameter is the average of maximum diameters of fibers included in three or more measurement areas of 30 µm × 30 µm in the cross-section described above. Further, for example, the average fiber length is the average of maximum lengths of fibers included in three or more measurement areas of 30 µm × 30 µm in the cross-section described above.

### [Polymer Electrolyte Fuel Cell]

With reference to Fig. 4, a configuration of the polymer electrolyte fuel cell having the aforementioned membrane electrode assembly 10 will be described.

As shown in Fig. 4, the polymer electrolyte fuel cell 30 includes the membrane electrode assembly 10, a pair of gas diffusion layers 31A and 31C, and a pair of separators 32A and 32C. The membrane electrode assembly 10 is sandwiched between the gas diffusion layer 31A and the gas diffusion layer 31C. The gas diffusion layer 31A is in contact with the fuel electrode catalyst layer 12A, and the gas diffusion layer 31C is in contact with the air electrode catalyst layer 12C. The gas diffusion layers 31A and 31C have electrical conductivity, and also have a function of diffusing the gas supplied to the catalyst layers 12A and 12C. The gas diffusion layers 31A and 31C may be made of, for example, carbon cloth, carbon paper, or the like.

A laminate formed of the membrane electrode assembly 10 and the gas diffusion layers 31A and 31C is sandwiched between the separators 32A and 32C. The separators 32A and 32C are made of a material electrically conductive and impermeable to gas. A surface of the separator 32A which faces the gas diffusion layer 31A is provided with a gas flow path 33A, and a surface facing away from the gas diffusion layer 31A is provided with a cooling water flow path 34A. Similarly, a surface of the separator 32C which faces the gas diffusion layer 31C is provided with a gas flow path 33C, and a surface facing away from the gas diffusion layer 31C is provided with a cooling water flow path 34C.

In the above configuration, the fuel electrode catalyst layer 12A and the gas diffusion layer 31A constitute a fuel electrode, which is an anode, and the air electrode catalyst layer 12C and the gas diffusion layer 31C constitute an air electrode, which is a cathode.

In use of the polymer electrolyte fuel cell 30, a fuel gas such as hydrogen flows through the gas flow path 33A of the fuel electrode-side separator 32A, and an oxidant gas such as oxygen flows through the gas flow path 33C of the air electrode-side separator 32C. Further, cooling water flows through the cooling water flow paths 34A and 34C of the respective separators 32A and 32C. As the fuel gas is supplied from the gas flow path 33A to the fuel electrode and the oxidant gas is supplied from the gas flow path 33C to the air electrode, an electrode reaction proceeds to thereby generate an electromotive force between the fuel electrode and the air electrode. Further, an organic fuel such as methanol may also be supplied to the fuel electrode.

The polymer electrolyte fuel cell 30 may be used as a single cell as shown in Fig. 4, or may be used as a single fuel cell in which a plurality of polymer electrolyte fuel cells 30 are laminated and connected in series.

Further, the membrane electrode assembly 10 may be formed including the aforementioned gas diffusion layers 31A and 31C, in addition to the polymer electrolyte membrane 11 and the catalyst layers 12A and 12C. In addition, the polymer electrolyte fuel cell 30 may also include a gasket having a function of preventing the gas or the like supplied to the catalyst layers 12A and 12C from leaking out of the fuel cell. Such a gasket may also be included in the membrane electrode assembly 10. The gasket is disposed surrounding the outer periphery of the laminate formed of the polymer electrolyte membrane 11 and the catalyst layers 12A and 12C.

### [Methods for Producing Electrode Catalyst Layer and Membrane Electrode Assembly]

Methods for producing the aforementioned catalyst layers 12A and 12C and the membrane electrode assembly 10 will now be described.

The catalyst layers 12A and 12C are formed by applying a catalyst layer slurry containing a constituent material for the catalyst layers 12A and 12C on the substrate to form a coating film, and drying the coating film.

The catalyst layer slurry is obtained by adding a polymer electrolyte powder or an electrolyte solution in which a polymer electrolyte powder is dissolved or dispersed, the catalyst material-supporting carbon body 20, and the polymer electrolyte fibers 22 to a solvent, followed by mixing. The polymer electrolyte fiber 22 is formed of, for example, by using an electrospinning technique or the like. In formation of the electrode catalyst layer having the second configuration, the catalyst layer slurry further includes the carbon fibers 23.

The solvent for the catalyst layer slurry is not specifically limited. Examples of the solvent include water; alcohols such as methanol, ethanol, 1-propanol, 2-propanol, 1-butanol, 2-butanol, isobutyl alcohol, and tert-butyl alcohol; ketones such as acetone, methyl ethyl ketone, methyl propyl ketone, methyl butyl ketone, methyl isobutyl ketone, methyl amyl ketone, pentanone, heptanone, cyclohexanone, methyl cyclohexanone, acetonylacetone, diethylketone, dipropyl ketone, and diisobutyl ketone; ethers such as tetrahydrofuran, tetrahydropyran, dioxane, diethylene glycol dimethylether, anisole, methoxy toluene, diethylether, dipropylether, and dibutylether; amines such as isopropylamine, butylamine, isobutylamine, cyclohexylamine, diethylamine, and aniline; esters such as propyl formate, isobutyl formate, amyl formate, methyl acetate, ethyl acetate, propyl acetate, butyl acetate, isobutyl acetate, pentyl acetate, isopentyl acetate, methyl propionate, ethyl propionate, and butyl propionate; acetic acid, propionic acid, dimethylformamide, dimethylacetamide, and N-methylpyrrolidone. Further, examples of glycol solvents and glycol ether solvents include ethylene glycol, diethylene glycol, propylene glycol, ethylene glycol monomethylether, ethylene glycol dimethylether, ethylene glycol diethylether, diacetone alcohol, 1-methoxy-2-propanol, and 1-ethoxy-2-propanol.

For the substrate for forming the catalyst layers 12A and 12C, a transfer substrate which is peeled off after the catalyst layers 12A and 12C are transferred to the polymer electrolyte membrane 11 are used. The transfer substrate may be formed of, for example, a resin film. Alternatively, the polymer electrolyte membrane 11, or the gas diffusion layers 31A and 31C may also be formed for the substrate for forming the catalyst layers 12A and 12C.

A method for applying the catalyst layer slurry to the substrate is not specifically limited. Examples of the application method include doctor blading, die coating, dipping, screen printing, laminator roll coating, and spraying.

The coating film which is the catalyst layer slurry applied to the substrate is dried, for example, by hot air drying or infrared drying. The drying temperature may be approximately in the range of 40°C or more and 200°C or less, and preferably approximately in the range of 40°C or more and 120°C or less. The drying time may be approximately in the range of 0.5 minute or more and 1 hour or less, and preferably approximately in the range of 1 minute or more and 30 minutes or less.

When a transfer substrate or the gas diffusion layers 31A and 31C are used as the substrate for forming the catalyst layers 12A and 12C, the catalyst layers 12A and 12C are joined to the polymer electrolyte membrane 11 by thermocompression bonding. When a transfer substrate is used as the substrate, the transfer substrate is peeled from the catalyst layers 12A and 12C after joining of the catalyst layers 12A and 12C. When the gas diffusion layers 31A and 31C are used as the substrate, peeling of the substrate is not required.

According to a production method which uses the polymer electrolyte membrane 11 as the substrate for forming the catalyst layers 12A and 12C, the catalyst layers 12A and 12C are directly formed on the polymer electrolyte membrane 11. For this reason, increased adhesion between the polymer electrolyte membrane 11 and the catalyst layers 12A and 12C can be obtained, and no pressure is required to join the catalyst layers 12Aand 12C. Accordingly, the catalyst layers 12A and 12C are prevented from being collapsed. Therefore, it is preferred to use the polymer electrolyte membrane 11 as a substrate for forming the catalyst layers 12A and 12C.

Since the polymer electrolyte membrane 11 swells and shrinks greatly, using the polymer electrolyte membrane 11 as a substrate causes a large change in volume of the substrate in the step of drying the coating film, which is used for forming the catalyst layers 12A and 12C, compared with a case where a transfer substrate or the gas diffusion layers 31A and 31C are used as the substrate. Therefore, in the conventional configuration in which the electrode catalyst layer does not include the fiber material, cracking is likely to occur in the electrode catalyst layer. On the other hand, the catalyst layers 12A and 12C of the present embodiment can reduce occurrence of cracking due to the fiber materials contained, and is suitable for use in the production method using the polymer electrolyte membrane 11 as the substrate for forming the catalyst layers 12A and 12C.

Further, in the present embodiment, the catalyst material-supporting carbon body 20, the fiber material including the polymer electrolyte fibers 22, and the polymer electrolyte powder for forming the aggregate 21 are mixed in the catalyst layer slurry, in other words, in the state before the film is formed. Accordingly, compared with a case, for example, where a mass of entangled polymer electrolyte fibers 22 is formed and impregnated with a liquid material containing the catalyst material-supporting carbon body 20 and the polymer electrolyte powder, the electrode catalyst layer in which the aggregates 21 are uniformly dispersed in the gaps between the fiber materials can be formed. Therefore, the three-phase interface is more likely to be formed as described above, and thus the output of the polymer electrolyte fuel cell is increased.

The polymer electrolyte fuel cell 30 is produced by assembling the gas diffusion layers 31A and 31C and the separators 32A and 32C to the membrane electrode assembly 10, and further providing a gas supply mechanism and the like.

### [Examples]

The aforementioned electrode catalyst layer, the membrane electrode assembly, and the polymer electrolyte fuel cell will be described below using specific examples and comparative examples.

### (Example 1)

Platinum on carbon (TEC10E50E: manufactured by Tanaka Kikinzoku Kogyo K.K) was used as a catalyst material-supporting carbon body. 20 g of the platinum on carbon was added and mixed with water, and then 10g of polymer electrolyte fiber, polymer electrolyte dispersion (Nafion dispersion: manufactured by Wako Pure Chemical Industries, Ltd.), and 1-propanol were added and stirred to produce a catalyst layer slurry. A polymer electrolyte dispersion (Nafion dispersion: manufactured by Wako Pure Chemical Industries, Ltd.) was made into a fibrous form by an electrospinning technique, followed by cooling and crushing, to thereby prepare polymer electrolyte fibers. The polymer electrolyte fibers had an average fiber diameter of 150 nm, and an average fiber length of 10 µm. Further, the average fiber diameter is a value rounded to the nearest 10, and the average fiber length is a value rounded to the nearest 1. In addition, the amount of the polymer electrolyte dispersion added to the catalyst slurry was adjusted so that the ratio of the total mass of the polymer electrolyte in the dispersion to the total mass of the carbon particles of the catalyst material-supporting carbon body in the catalyst slurry becomes 0.6.

The catalyst slurry was applied to a polymer electrolyte membrane (Nafion 212: manufactured by DuPont) by a die coating technique, and dried in a furnace at 80°C to thereby obtain a membrane electrode assembly of Example 1 having a pair of electrode catalyst layers and a polymer electrolyte membrane.

Furthermore, the membrane electrode assembly was sandwiched by two gas diffusion layers (SIGRACET 35BC: manufactured by SGL) to form a polymer electrolyte fuel cell of Example 1 by using a standard cell obtained from JARI (Japan Automobile Research Institute).

### (Example 2)

A membrane electrode assembly and a polymer electrolyte fuel cell of Example 2 were obtained in the same manner as Example 1 except that polymer electrolyte fibers having an average fiber diameter of 1.0 µm and an average fiber length of 10 µm were used as the polymer electrolyte fiber. Further, the average fiber diameter is a value rounded to the nearest 0.1, and the average fiber length is a value rounded to the nearest 1.

### (Example 3)

A membrane electrode assembly and a polymer electrolyte fuel cell of Example 3 were obtained in the same manner as Example 1 except that polymer electrolyte fibers having the average fiber diameter of 1.3 µm and the average fiber length of 10 µm were used as the polymer electrolyte fiber. Further, the average fiber diameter is a value rounded to the nearest 0.1, and the average fiber length is a value rounded to the nearest 1.

### (Example 4)

A membrane electrode assembly and a polymer electrolyte fuel cell of Example 4 were obtained in the same manner as Example 1 except that 5g of polymer electrolyte fibers were added to the catalyst layer slurry, and 5g of carbon fibers were further added thereto. VGCF-H (manufactured by Showa Denko K.K) was used as the carbon fiber. The polymer electrolyte fibers had an average fiber diameter of 150 nm, and an average fiber length of 10 µm. The carbon fibers had an average fiber diameter of 150 nm, and an average fiber length of 10 µm. Further, the average fiber diameter is a value rounded to the nearest 10, and the average fiber length is a value rounded to the nearest 1.

### (Example 5)

A membrane electrode assembly and a polymer electrolyte fuel cell of Example 5 were obtained in the same manner as Example 1 except that the amount of the polymer electrolyte dispersion added to the catalyst slurry was modified so that the ratio of the total mass of the polymer electrolyte in the dispersion to the total mass of the carbon particles of the catalyst material-supporting carbon body in the catalyst slurry becomes 1.2.

### (Comparative Example)

A membrane electrode assembly and a polymer electrolyte fuel cell of Comparative Example were obtained in the same manner as Example 1 except that the polymer electrolyte fibers were not added to the catalyst layer slurry.

### (Reference Example)

A membrane electrode assembly and a polymer electrolyte fuel cell of Reference Example were obtained in the same manner as Example 1 except that 10g of carbon fibers were added, instead of the polymer electrolyte fibers, to the catalyst layer slurry. VGCF-H (manufactured by Showa Denko K.K) was used as the carbon fiber. The carbon fibers had an average fiber diameter of 150 nm, and an average fiber length of 10 µm. Further, the average fiber diameter is a value rounded to the nearest 10, and the average fiber length is a value rounded to the nearest 1.

### (Evaluation)

### <Evaluation of Cracking>

For the membrane electrode assemblies of the Examples, Comparative Example, and Reference Example, the surface of the electrode catalyst layer was observed by using a microscope (magnification: 200x) to examine for any occurrence of cracking. Table 1 shows the evaluation results. The case where a crack of 10 µm length or more was found was evaluated as poor, and the case where a crack of 10 µm length or more was not found was evaluated as good.

### <Evaluation of Power Generation Performance>

For the polymer electrolyte fuel cell of Examples, Comparative Example, and Reference Example, an output density was measured as the power generation performance. The output density was measured by supplying hydrogen (100% RH) as a fuel gas and air (100% RH) as an oxidizing gas, and a maximum output density was measured in an environment at 80°C. Table 1 shows the measurement results.

**[Table 1]**

| | Crack | Maximum output density [mW/cm²] |
|---|---|---|
| Example 1 | Good | 860 |
| Example 2 | Good | 825 |
| Example 3 | Good | 651 |
| Example 4 | Good | 923 |
| Example 5 | Good | 705 |
| Comparative Example | Poor | 633 |
| Reference Example | Good | 820 |

As shown in Table 1, large cracks occurred in a Comparative Example in which the electrode catalyst layer included no fiber material, whereas occurrence of cracking was reduced in Examples 1 to 5 in which the electrode catalyst layer included the polymer electrolyte fibers. Further, focusing on Examples 1 to 3, in which the conditions were the same except for the average fiber diameter of the polymer electrolyte fibers, the output of the fuel cell significantly increased in Examples 1 and 2 in which the average fiber diameter was 1 µm or less compared with that in Example 3 in which the average fiber diameter was more than 1 µm. This suggests that pores were suitably formed in the electrode catalyst layer when the average fiber diameter of the polymer electrolyte fibers was 1 µm or less. In particular, in Example 1 in which the average fiber diameter of the polymer electrolyte fibers was smaller, a higher output was obtained.

Further, in Example 4, in which the average fiber diameters of the polymer electrolyte fibers and of the carbon fibers were 1 µm or less, the output of the fuel cell was further improved. This suggests that pores were suitably formed by the fiber materials, and that conduction of protons and electrons in the electrode catalyst layer was promoted by two types of fiber materials.

Further, in Example 5, in which the ratio of the aggregate of polymer electrolytes was increased, the output of the fuel cell was decreased compared with Example 1. This suggests that, while conduction of protons was promoted due to the electrode catalyst layer containing the polymer electrolyte fibers, the volume of pores decreased due to the increased amount of the aggregate of polymer electrolytes and thus water discharge ability was lowered.

In the Reference Example which includes only the carbon fibers as the fiber material, occurrence of cracking was reduced. However, compared with examples which include the aggregate of polymer electrolytes at the same ratio, the output of the fuel cell tends to be higher in Examples 1 and 2 which include only the polymer electrolyte fibers as the fiber material. Further, the output was particularly high in Example 4 which includes the polymer electrolyte fibers and the carbon fibers. Therefore, it is suggested that the output of the fuel cell can be improved when the electrode catalyst layer includes polymer electrolyte fibers with an average fiber diameter of 1 µm or less, compared with an electrode catalyst layer which includes only carbon fibers as the fiber material.

As described above using the examples, according to the electrode catalyst layer, the membrane electrode assembly, and the polymer electrolyte fuel cell of the above embodiment, the following effects can be obtained.
(1) The catalyst layers 12A and 12C include the polymer electrolyte fibers 22 having the average fiber diameter of 2 µm or less. With this configuration, a structure in which the polymer electrolyte fibers 22 are entangled with each other in the electrode catalyst layer is formed, and this structure functions as a support for the aggregate 21 in the electrode catalyst layer. Accordingly, occurrence of cracking in the electrode catalyst layers 12A and 12C is reduced.
(2) When the average fiber diameter of the polymer electrolyte fibers 22 is 1 µm or less, sufficient pores Hl are formed in the electrode catalyst layer. Accordingly, the output of the fuel cell can be improved.
(3) When the average fiber length of the polymer electrolyte fibers 22 is in the range of 1 µm or more and 200 µm or less, aggregation of the polymer electrolyte fibers 22 in the electrode catalyst layer is reduced, which facilitates formation of the pores Hl. Further, since a structure in which the polymer electrolyte fibers 22 are entangled with each other in the electrode catalyst layer is suitably formed, the electrode catalyst layer has increased strength. Accordingly, the effect of reducing occurrence of cracking is further enhanced.
(4) In a configuration in which the catalyst layers 12A and 12C further include the carbon fiber 23, proton conductivity by the polymer electrolyte fibers 22 and electron conductivity by the carbon fibers 23 can be improved in the electrode catalyst layer. Accordingly, the output of the fuel cell can be improved.
(5) When a ratio of the total mass of the polymer electrolyte fibers 22 to the total mass of the carbon particles Pc in the electrode catalyst layer is within the range of 0.1 or more and 3.0 or less, conduction of the protons in the electrode catalyst layer is promoted. Accordingly, the output of the fuel cell can be improved.
(6) When a ratio of the total mass of the aggregate 21 of polymer electrolytes to the total mass of the carbon particles Pc in the electrode catalyst layer is 1.0 or less, formation of pores HI is facilitated, and the amount of polymer electrolyte required for formation of the electrode catalyst layer can be reduced. Since the electrode catalyst layer includes the polymer electrolyte fibers 22, good proton conductivity can be obtained even if the ratio of the aggregate is not high.

### [Modifications]

The above embodiment can be implemented with modifications as described below. • In the membrane electrode assembly 10, the electrode catalyst layer may be configured such that only one of the fuel electrode catalyst layer 12A and the air electrode catalyst layer 12C contains the polymer electrolyte fibers 22. In this configuration, there is an advantage that cracking can be reduced in one of the electrode catalyst layers which contains the polymer electrolyte fiber 22, compared with the configuration in which neither the fuel electrode catalyst layer 12A nor the air electrode catalyst layer 12C contain the fiber materials. Further, one of the fuel electrode catalyst layer 12Aand the air electrode catalyst layer 12C may contain only the polymer electrolyte fibers 22 as the fiber material, and the other may contain both the polymer electrolyte fibers 22 and the carbon fibers 23 as the fiber material.

The fiber material contained in the electrode catalyst layer may be any fiber that functions as an electrolyte, in other words, any organic electrolyte fiber having proton conductivity. The organic electrolyte fiber may be a fiber that is entirely made of a polymer electrolyte as in the above embodiment. Alternatively, part of the organic electrolyte fiber may be made of a polymer electrolyte, and the remaining part may be made of a material different from the polymer electrolyte.

### [Reference Signs List]

- H1: pore
- Pc: carbon particle
- Ps: catalyst material
- 10: membrane electrode assembly
- 11: polymer electrolyte membrane
- 12A: fuel electrode catalyst layer
- 12C: air electrode catalyst layer
- 20: catalyst material-supporting carbon body
- 21: aggregate
- 22: polymer electrolyte fiber
- 23: carbon fiber
- 30: polymer electrolyte fuel cell
- 31A, 31C: gas diffusion layer
- 32A, 32B: separator
- 33A, 33C: gas flow path
- 34A, 34C: cooling water flow path

## Claims

1. An electrode catalyst layer comprising: carbon particles supporting a catalyst material; an aggregate of polymer electrolytes; and organic electrolyte fibers, wherein the organic electrolyte fibers have an average fiber diameter of 2 µm or less.

2. The electrode catalyst layer according to claim 1, wherein the organic electrolyte fibers have an average fiber diameter of 1 µm or less.

3. The electrode catalyst layer according to claim 1 or 2, wherein the organic electrolyte fibers have an average fiber length of 1 µm or more and 200 µm or less.

4. The electrode catalyst layer according to any one of claims 1 to 3, further comprising carbon fibers.

5. The electrode catalyst layer according to any one of claims 1 to 4, wherein a ratio of a total mass of the organic electrolyte fibers to a total mass of the carbon particles included in the electrode catalyst layer is in a range of 0.1 or more and 3.0 or less.

6. The electrode catalyst layer according to any one of claims 1 to 5, wherein the organic electrolyte fibers are made of a polymer electrolyte.

7. The electrode catalyst layer according to claim 6, wherein a ratio of a total mass of the aggregate to a total mass of the carbon particles included in the electrode catalyst layer is 1.0 or less.

8. A membrane electrode assembly comprising:
a polymer electrolyte membrane; and
a pair of electrode catalyst layers sandwiching the polymer electrolyte membrane, wherein at least one of the pair of electrode catalyst layers is the electrode catalyst layer according to any one of claims 1 to 7.

9. A polymer electrolyte fuel cell comprising:
the membrane electrode assembly according to claim 8; and
a pair of separators sandwiching the membrane electrode assembly.
